# DEMANDE DE BREVET EUROPEEN

(11) **EP 1 081 013 A1**
(43) Date de publication de la demande: **07.03.2001**
(21) Numéro de dépôt: 00402347.9
(22) Date de dépôt: 23.08.2000
(51) Int. Cl.: B62B 5/04

(54) **Chariot, notamment à bagages, équipé d'un dispositif de freinage de roue**

(30) Priorité: 03.09.1999 FR 9911079
(71) Demandeur: ATELIERS REUNIS CADDIE, F-67300 Schiltigheim (FR)
(72) Inventeur: Joseph, Alice, 67301 Schiltigheim Cedex (FR); Le Marchand, Alain, 67116 Reichstett (FR)
(74) Mandataire: CABINET BONNET-THIRION

(57) **Abrégé**

Chariot comportant un support (11), deux montants (12) fixés audit support (11) au voisinage de l'extrémité arrière de celui-ci, où il porte latéralement deux roulettes (19) arrière, l'extrémité supérieure des montants (12) supportant à rotation (17) l'extrémité des ailes d'une poignée de manoeuvre (18) en forme de U (28,29), lequel chariot comporte également un dispositif de freinage (30) pour le freinage d'au moins l'une des roues arrière (19) comprenant un organe de commande (31), dont la poignée de manoeuvre (18) fait partie, et un organe d'actionnement (41) associé à ladite roue arrière (19) sur laquelle est appliqué un patin de freinage (46) lorsque l'organe de commande (31) est au repos, la poignée de manoeuvre (18) n'étant pas sollicitée, l'organe d'actionnement (41) étant relié à l'organe de commande (31) pour éloigner le patin (46) de la roue arrière (19) sous l'action de l'organe de commande (31) lorsque la poignée de manoeuvre (18) est déplacée en rotation vers le haut ou vers le bas : l'organe d'actionnement (41) est relié à l'organe de commande (31) par une liaison à câble (39) et comprend, outre la poignée de manoeuvre (18), une biellette (32) montée à rotation à l'extrémité supérieure d'un montant (12) et reliée, par une de ses extrémités, au câble (39), la poignée de manoeuvre (18) étant adaptée à coopérer avec l'autre extrémité de la biellette (32) pour commande en rotation de celle-ci.

## Description

La présente invention concerne un chariot, notamment à bagages, équipé d'un dispositif de freinage de roue.

Un tel chariot comprend généralement un support de charge, matérialisant une plate-forme destinée à recevoir notamment des bagages, deux montants verticaux fixés latéralement par leur extrémité inférieure audit support au voisinage d'une extrémité de celui-ci, dite extrémité arrière, en bout de laquelle le support porte latéralement deux roulettes, dites roulettes arrière, placées à l'extérieur des montants verticaux, l'autre extrémité, dite avant, du support portant au moins une roulette dite avant. Généralement, il n'y a qu'une seule roulette avant, montée pivotante.

Pour la manoeuvre du chariot, l'extrémité supérieure des montants verticaux supporte une poignée de manoeuvre.

Le dispositif de freinage comporte un patin de freinage adapté à coopérer, sous l'action d'un ressort, avec au moins une roue arrière pour immobilisation du chariot à l'arrêt ; généralement, les deux roues arrière sont associées chacune à un dispositif de freinage.

Un chariot de ce type est bien connu et est, par exemple, disponible en libre-service dans les gares et aéroports pour le transport de bagages.

Leur utilisation nécessite bien entendu, pour le roulage du chariot, la mise hors service du dispositif de freinage, c'est-à-dire le déblocage de la (ou des) roue(s) arrière.

Dans la majorité des cas, ces chariots connus ont une poignée de manoeuvre fixe associée à une poignée mobile qu'il est nécessaire de rapprocher de la poignée fixe pour la mise hors service du dispositif de freinage : cette opération peu naturelle n'est pas toujours effectuée par l'utilisateur qui pousse le chariot alors que le dispositif de freinage est opérationnel.

Pour éviter cet inconvénient, on a proposé, notamment dans le document FR-A-2 258 294, de ne prévoir qu'une seule poignée, la poignée de manoeuvre, en forme générale de U, dont l'âme s'étend horizontalement vers l'arrière du chariot, montée à rotation à l'extrémité libre des ailes du U, ladite âme étant dans un plan passant par l'axe d'articulation qui est incliné par rapport au plan horizontal passant par ledit axe selon un angle d'inclinaison peu important, de sorte que, lorsque l'on agit sur la poignée de manoeuvre en l'abaissant, le dispositif de freinage est mis hors service.

Une telle disposition convient bien dans la mesure où l'usager appréhende la poignée de manoeuvre par le dessus et agit bien sur elle vers le bas en l'abaissant ; or, comme on le sait, il n'en est pas toujours ainsi et souvent l'usager, notamment de petite taille, appréhende la poignée de manoeuvre par le bas et agit sur elle en la relevant.

Pour éviter ces inconvénients, on a proposé notamment dans le document FR-A-2 202 485, une disposition selon laquelle la poignée de manoeuvre est sollicitée vers le haut ou vers le bas pour mise hors service du dispositif de freinage.

L'invention a pour but de proposer un chariot ayant une disposition de ce genre avec un dispositif de freinage de grande fiabilité, quasiment sans risque de coincement.

Ainsi, selon l'invention, un chariot du genre comportant un support de charge, destiné notamment à recevoir des bagages, deux montants verticaux fixés latéralement par leur extrémité inférieure audit support au voisinage d'une extrémité de celui-ci, dite extrémité arrière, en bout de laquelle le support porte latéralement deux roulettes, dites roulettes arrière, placées à l'extérieur des montants verticaux, l'autre extrémité, dite avant, du support portant au moins une roulette dite avant, l'extrémité supérieure des montants verticaux supportant à rotation l'extrémité libre des ailes d'une poignée de manoeuvre en forme générale de U dont l'âme s'étend horizontalement vers l'arrière du chariot, ladite âme étant dans un plan passant par l'axe d'articulation qui est incliné par rapport au plan horizontal passant par ledit axe selon un angle d'inclinaison peu important, lequel chariot comporte également un dispositif de freinage pour le freinage d'au moins l'une des roues arrière comprenant un organe de commande, dont la poignée de manoeuvre fait partie, et un organe d'actionnement associé à ladite roue arrière dont il est proche, un patin de freinage étant appliqué contre ladite roue arrière lorsque l'organe d'actionnement n'est pas commandé par l'organe de commande alors au repos, la poignée de manoeuvre n'étant pas sollicitée, l'organe d'actionnement étant relié à l'organe de commande et adapté à éloigner le patin de la roue arrière sous l'action de l'organe de commande lorsque la poignée de manoeuvre est déplacée en rotation, selon un sens de rotation, en étant sollicitée vers le haut ou vers le bas, l'organe d'actionnement étant mis en oeuvre également lorsque la poignée de manoeuvre est déplacée en rotation selon l'autre sens de rotation en étant sollicitée dans la direction inverse de la précédente, est caractérisé par le fait que l'organe d'actionnement est relié à l'organe de commande par une liaison à câble, lequel organe de commande comprend, outre la poignée de manoeuvre, une biellette montée à rotation par sa partie centrale à l'extrémité supérieure d'un montant vertical et reliée, par une de ses extrémités, au câble, la poignée de manoeuvre étant adaptée à coopérer avec l'autre extrémité de la biellette pour commande en rotation de celle-ci autour de son axe d'articulation.

De préférence, l'axe d'articulation de la poignée de manoeuvre est disposé au dessus de l'axe d'articulation de la biellette, le câble étant attelé à l'extrémité inférieure de la biellette et la poignée de manoeuvre adaptée à coopérer avec la partie, dite haute, de la biellette qui s'étend au dessus de son axe d'articulation ; au moins l'extrémité des ailes de la poignée de manoeuvre en forme de U, par laquelle elle est montée articulée sur les montants verticaux, est en forme de fer-plat dont la tranche inférieure est adaptée à coopérer avec un galet d'appui porté par la biellette à son extrémité supérieure.

De préférence, l'extrémité, montée à articulation, de l'aile concernée de la poignée de manoeuvre porte une oreille dirigée vers la biellette et munie d'un galet d'appui adapté à coopérer avec la partie haute de la biellette.

Avantageusement, le câble est attelé à l'extrémité inférieure de la biellette par l'intermédiaire d'un galet d'attache monté tournant par rapport à la biellette.

Avantageusement, chaque montant vertical comprend deux longerons tubulaires, un longeron arrière et un longeron avant, reliés à leur partie supérieure par une plaque d'assemblage ; la liaison entre l'organe de commande et l'organe d'actionnement comprend une gaine associée au câble traversant le longeron arrière dans lequel elle s'étend en grande partie.

De préférence, le patin est porté par un étrier monté articulé à rotation sur le longeron arrière et sollicité dans le sens d'application du patin sur le bandage de la roue arrière par un ressort en appui, d'un côté, sur le longeron arrière et, de l'autre côté, sur l'étrier ; l'effort d'application du patin sur la roue arrière provenant du ressort est réglable ; le patin est muni d'au moins une nervure de freinage s'étendant parallèlement à l'axe de la roue arrière.

Selon une forme de réalisation préférée, l'étrier est adapté à chevaucher latéralement le longeron arrière et comprend deux flasques latéraux par lesquels il est monté à rotation sur le longeron arrière, reliés, de manière déportée vers l'extérieur du chariot par rapport à l'axe d'articulation de l'étrier, d'une part, par le patin et, d'autre part, par une traverse, le patin et la traverse s'étendant dans des plans parallèles à l'axe d'articulation de l'étrier en étant globalement perpendiculaires l'un à l'autre ; l'étrier est monté articulé par sa partie inférieure et le patin est disposé au dessus de l'axe d'articulation de l'étrier et s'étend globalement horizontalement en étant adapté à coopérer avec la partie supérieure du bandage de la roue arrière, le ressort étant un ressort de compression.

De préférence, le ressort prend appui sur le longeron arrière par l'intermédiaire d'un écrou qui coopère avec une tige filetée d'un téton porté par le longeron arrière.

De préférence, lorsque chaque montant vertical comprend deux longerons reliés à leur partie supérieure par une plaque d'assemblage, la poignée de manoeuvre et la biellette sont portées à articulation par la plaque d'assemblage.

Avantageusement, le câble est lié à l'organe d'actionnement par l'intermédiaire d'un galet d'attache porté par les flasques latéraux de l'étrier ; le galet d'attache est monté tournant par rapport aux flasques latéraux.

De préférence, l'organe de commande et l'organe d'actionnement sont protégés par un capot.

De préférence, l'extrémité de la gaine côté organe de commande est fixée au montant vertical par l'intermédiaire d'un galet monté pivotant.

Avantageusement, les deux roues arrière sont associées chacune à un dispositif de freinage.

De préférence, le chariot est emboîtable et équipé d'un dispositif de soulèvement adapté, lorsque deux tels chariots sont emboîtés l'un dans l'autre, à soulever les roues arrière du chariot précédent ; ainsi, une file de chariot emboîtés peut être déplacée en agissant uniquement sur la poignée de manoeuvre du dernier chariot de la file.

Pour mieux faire comprendre l'objet de l'invention, on va en décrire maintenant, à titre d'exemple, purement illustratif et non limitatif, un mode de réalisation représenté sur les dessins annexés.

Sur ces dessins :
- la figure 1 est une vue en élévation d'un chariot selon l'invention ;
- la figure 2 est une demi vue de dessus par rapport à la figure 1 ;
- la figure 3 est une vue de face partielle, à plus grande échelle, montrant l'organe de commande du dispositif de freinage ;
- la figure 4 est une vue éclatée de la figure 3 ;
- la figure 5 est une vue latérale partielle de l'organe de commande des figures 3 et 4 ;
- la figure 6 est une vue de face partielle, à plus grande échelle, montrant l'organe d'actionnement du dispositif de freinage ;
- la figure 7 est une vue latérale partielle de l'organe d'actionnement de la figure 6.

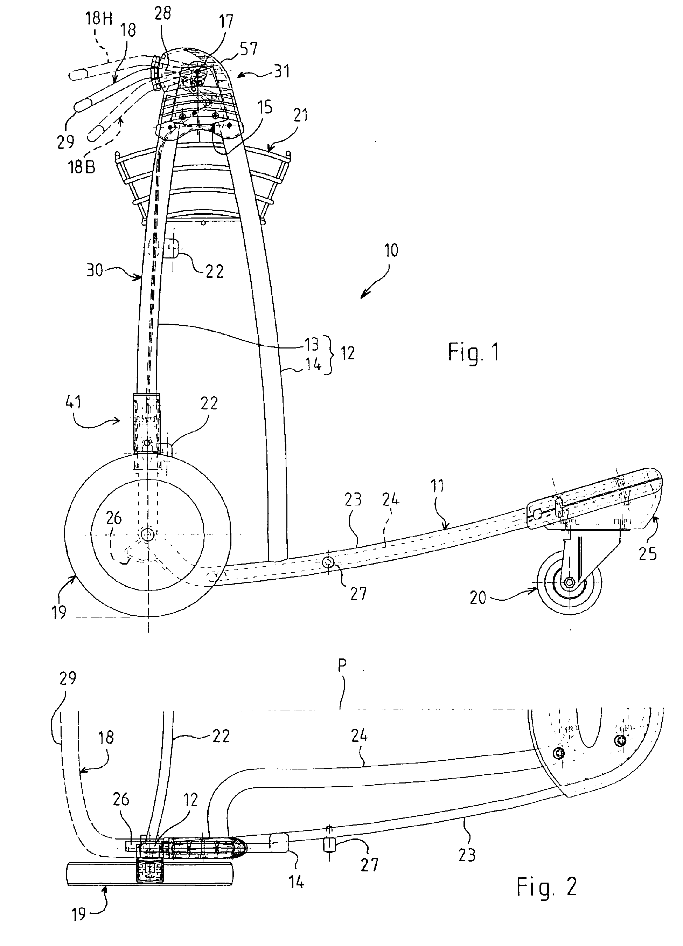

Le chariot 10 des figures 1 et 2 comprend un support 11 de charge, ici en tubes soudés, matérialisant une plateforme pouvant recevoir notamment des bagages et constitué d'une ceinture 23 en forme de U à fond arrondi et dont les extrémités des ailes sont légèrement relevées et portent en bout à rotation chacune une roue arrière 19 ; deux poutres 24, disposées à l'intérieur de la ceinture, sont soudées, d'un côté, aux ailes de la ceinture 23, légèrement en avant des axes des roues arrière 19 et, de l'autre côté, au fond du U de la ceinture 23 : les poutres 24 et la ceinture 23 définissent ainsi une surface d'accueil pour les bagages.

A l'extrémité avant du support 11, lui est assujetti un plateau 25 portant, ici de manière pivotante, une roue avant 20.

Au support 11 sont fixés latéralement, au voisinage de l'extrémité arrière du support 11, deux montants verticaux 12 ; plus précisément, chaque montant vertical 12 comprend deux longerons tubulaires, un longeron arrière 13 et un longeron avant 14, fixés par leur extrémité inférieure à la ceinture 23 et reliés à leur partie supérieure par une plaque d'assemblage 15.

Deux entretoises 22 relient transversalement les deux longerons arrière 13.

La plaque d'assemblage 15, en combinaison avec une contre-plaque 16, supporte un axe 17 autour duquel est montée à articulation une poignée de manoeuvre 18.

Plus précisément, en se reportant aux figures 1 à 5, on voit que la poignée de manoeuvre 18 est en forme générale de U dont l'âme 29, qui constitue en quelque sorte la barre de préhension pour la manoeuvre du chariot 10, s'étend horizontalement vers l'arrière du chariot et dont les ailes sont ici en forme de boomerang, l'extrémité 28 desdites ailes par laquelle la poignée de manoeuvre 18 est montée articulée autour de l'axe 17 étant avantageusement en forme de fer-plat dont le plan s'étend pratiquement verticalement.

Dans la position de repos de la poignée de manoeuvre 18, expliquée ci-dessous, l'âme 29, ou barre de préhension, est dans un plan passant par l'axe 17 d'articulation qui est incliné par rapport au plan horizontal passant par ledit axe 17 selon un angle d'inclinaison peu important, voir nul, notamment compris entre plus ou moins quarante degrés : dans la forme représentée, cet angle d'inclinaison est de moins trente degrés, l'âme 29 étant dans un plan horizontal situé en dessous de celui qui contient l'axe 17.

Le chariot 10 est équipé d'un dispositif de freinage 30 pour le freinage, ici, des deux roues arrière 19. Le chariot 10 étant symétrique par rapport à un plan transversal vertical P, figure 2, les dispositifs de freinage 30 associés aux deux roues arrière 19 sont identiques et un seul sera décrit.

Le dispositif de freinage 30 comprend un organe de commande 31, dont la poignée de manoeuvre fait partie, plus précisément l'extrémité 28 en fer-plat de chacune de ses ailes, et un organe d'actionnement 41. Ces deux organes, de commande 31 et d'actionnement 41, sont reliés par une liaison comportant un câble 39 monté coulissant dans une gaine fixe 40 ; la gaine 40 traverse le longeron arrière 13 dans lequel elle s'étend en partie.

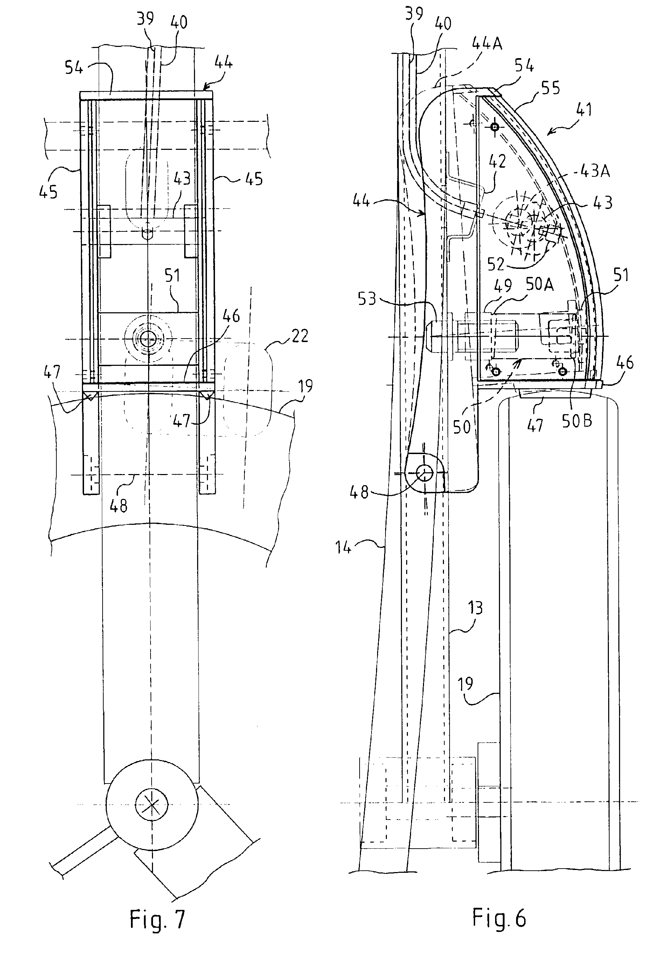

L'organe d'actionnement 41, mieux visible sur les figures 6 et 7, comprend un étrier 44 portant un patin de freinage 46 et monté articulé à rotation sur le longeron arrière 13 ; l'étrier 44 chevauche latéralement le longeron arrière 13 et comprend deux flasques latéraux 45, par lesquels il est monté à rotation sur le longeron arrière 13, reliés, de manière déportée vers l'extérieur du chariot par rapport à l'axe d'articulation 48 de l'étrier 44, d'une part, par le patin 46 et, d'autre part, par une traverse 51. Parallèlement, une barrette 54 les relie à leur partie supérieure.

Le patin 46 et la traverse 51 s'étendent dans des plans parallèles à l'axe d'articulation 48 en étant globalement perpendiculaires l'un à l'autre.

Ici, le patin 46 s'étend globalement horizontalement au dessus de l'axe d'articulation 48 et est adapté à coopérer avec la partie supérieure du bandage de la roue arrière 19.

Pour le freinage de la roue 19, le patin 46 porte ici deux nervures 47, par exemple à section triangulaire dont la base est côté patin 46 et le sommet côté bandage de roue, s'étendant parallèlement à l'axe de la roue 19 en embrassant un arc circonférentiel du bandage de roue.

Le patin 46 est appliqué vers la roue 19 par un ressort 50 représenté schématiquement sur la figure 6 où seules ses spires d'extrémité 50A, 50B sont représentées. Le ressort 50 prend appui d'un côté sur le longeron arrière 13 et de l'autre côté sur l'étrier 44, plus précisément sur la traverse 51 de l'étrier 44.

On préfère pouvoir ajuster de manière réglable l'effort d'application du patin 46 sur la roue 19 ; ici, cet ajustement est obtenu en réalisant l'appui du ressort 50 côté longeron arrière 13 sous forme d'un écrou 49 vissé sur la tige filetée d'un téton 53 fixé, par exemple par soudage, sur le longeron arrière 13.

Bien entendu, en variante, l'ajustement de l'effort d'application peut être réalisé de façon similaire côté appui sur l'étrier 44.

Les flasques 45 supportent un galet 43 pour l'attache du câble 39 à l'étrier 44 ; le galet 43 est globalement au droit de la partie centrale des flasques 45, du côté opposé à l'axe d'articulation 48 par rapport au ressort 50 ; le câble 39 traverse diamétralement le galet 43 et son extrémité libre est munie d'un arrêtoir 52 butant contre le corps du galet 43 lorsque le câble 39 est sollicité en traction.

L'extrémité inférieure de la gaine 40 est, à sa sortie du longeron arrière 13 qu'elle a traversé, fixée audit longeron par l'intermédiaire d'une butée de gaine 42.

Avantageusement, le galet 43 est monté tournant par rapport aux flasques 45 pour éviter tout coincement du câble 39 lorsque l'étrier 44 est amené à tourner autour de son axe 48, le brin de câble sorti de la gaine 40 changeant d'inclinaison lors de ce mouvement de l'étrier 44.

Les flasques 45 présentent une feuillure qui reçoit les ailes d'un capot 55.

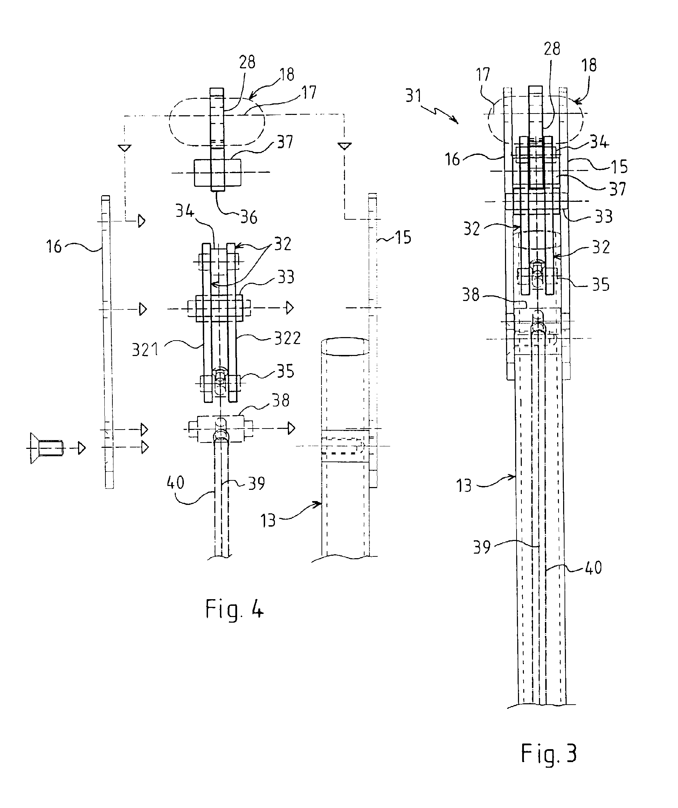

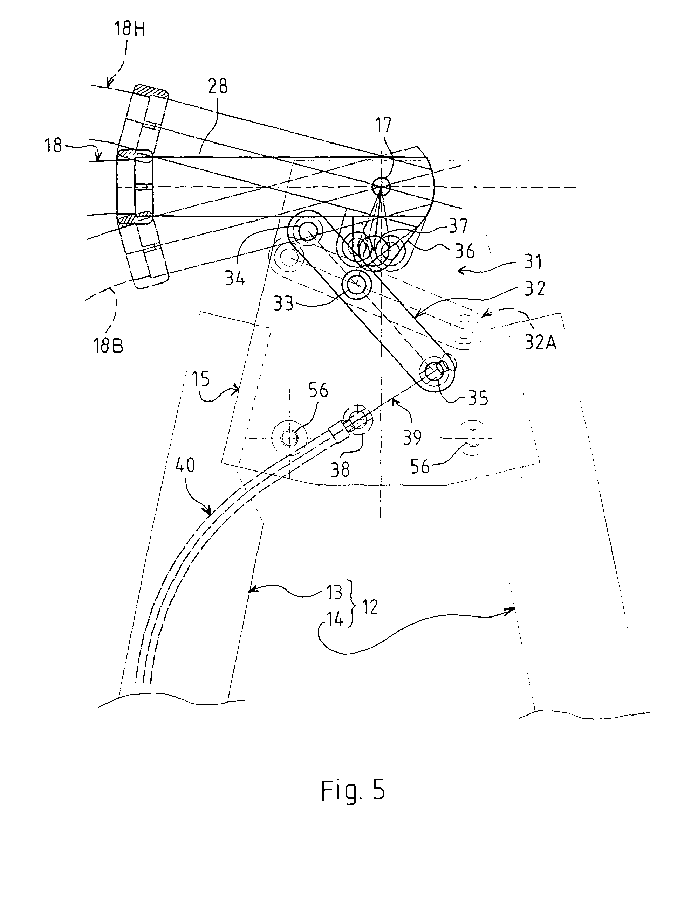

L'organe de commande 31, mieux visible sur les figures 4 et 5, comprend une biellette 32 montée à rotation par sa partie centrale à la partie supérieure des plaque 15 et contre-plaque 16 d'assemblage.

L'axe d'articulation 33 de la biellette 32 est disposée au dessous de l'axe d'articulation 17 de la poignée de manoeuvre 18 ; le câble 39 est attelé à l'extrémité inférieure de la biellette 32 par l'intermédiaire d'un galet 35 d'attache analogue au galet 43 ci-dessus et avantageusement monté tournant pour les mêmes raisons que celles évoquées ci-dessus à propos du galet 43 ; de même, l'extrémité supérieure de la gaine 40, à sa sortie du longeron arrière 13, est fixée aux plaque 15 et contre-plaque 16 d'assemblage par l'intermédiaire d'un galet 38 monté tournant.

A son extrémité supérieure, la biellette 32 porte un galet d'appui 34 destiné à coopérer avec la tranche inférieure de la partie en fer-plat 28 de la poignée de manoeuvre 18.

Comme on l'aura remarqué sur la figure 4, ici la biellette 32 est en deux parties 321, 322 identiques disposées parallèlement, entre et sur lesquelles sont montés les galets 33, 34, 35.

Lorsqu'une action vers le bas est appliquée à la barre de préhension 29 de la poignée de manoeuvre 18, celle-ci tourne autour de l'axe 17 dans le sens anti-horaire, figure 5, vers une position esquissée en 18B sur cette figure et, dans ce mouvement, le fer-plat 28 fait tourner la biellette 32 dans le même sens jusqu'à une position esquissée en 32A ; une traction, vers le haut a été appliquée au câble 39 ; l'étrier 44 a tourné autour de son axe 48 en comprimant le ressort 50 ; la roue arrière 19 est libérée ; la nouvelle position de l'étrier 44 est esquissée en 44A sur la figure 6 et celle de l'extrémité du câble en 43A.

Au droit de son axe d'articulation 17, le fer-plat 28 porte une oreille 36 dirigée vers la biellette 32 et munie d'un galet d'appui 37 destiné à coopérer avec la partie haute de la biellette 32, c'est-à-dire la partie comprise entre son axe d'articulation 33 et son extrémité supérieure portant le galet 34.

Ainsi, lorsqu'une action vers le haut est appliquée à la barre de préhension 29, celle-ci tourne autour de l'axe 17 dans le sens horaire, vers une position esquissée en 18H, figure 5, et, dans ce mouvement, le galet 37, en coopérant avec les tranches supérieures des parties 321, 322 de la biellette 32, fait tourner celle-ci dans le sens anti-horaire vers sa même position 32A décrite précédemment, ce qui libère la roue arrière 19.

En position de repos de la poignée de manoeuvre 18, le fer-plat 28 est pratiquement horizontal, en appui sur le galet 34 de la biellette 33 dont la position est fixée, par l'intermédiaire du câble 39 et de l'étrier 44, par l'appui du patin 46 sur la roue arrière 19 sous la sollicitation du ressort 50.

La partie supérieure des montants verticaux 12 et donc l'organe de commande 31, est protégée par un capot 57, figure 1, fixé sur la plaque d'assemblage 15 : on voit en 56, figure 5, les taraudages destinées à recevoir les vis de fixation, le capot 57 n'étant pas représenté sur cette figure 5.

Entre les montants verticaux 12, est fixée une corbeille 21, figure 1, destinée à recevoir des petits objets.

Le chariot 10 est prévu emboîtable ; il est équipé d'un dispositif de soulèvement adapté, lorsque deux tels chariots sont emboîtés l'un dans l'autre, à soulever les roues arrière freinées du chariot précédent ; ce dispositif de soulèvement est constitué de pans de levage 26 portés vers l'arrière du chariot par la ceinture 23, suivis d'une empreinte de calage destinée à recevoir chacune un pion de levage 27 porté latéralement par la ceinture 23, figures 1 et 2.

## Revendications

1. Chariot du genre comportant un support (11) de charge, destiné notamment à recevoir des bagages, deux montants verticaux (12) fixés latéralement par leur extrémité inférieure audit support (11) au voisinage d'une extrémité de celui-ci, dite extrémité arrière, en bout de laquelle le support (11) porte latéralement deux roulettes (19), dites roulettes arrière, placées à l'extérieur des montants verticaux (12), l'autre extrémité dite avant, du support (11) portant au moins une roulette (20) dite avant, l'extrémité supérieure des montants verticaux (12) supportant à rotation (17) l'extrémité libre des ailes d'une poignée de manoeuvre (18) en forme générale de U (28,29) dont l'âme (29) s'étend horizontalement vers l'arrière du chariot, ladite âme (29) étant dans un plan passant par l'axe de rotation (17) de la poignée de manoeuvre (18) qui est incliné par rapport au plan horizontal passant par ledit axe (17) selon un angle d'inclinaison peu important, lequel chariot comporte également un dispositif de freinage (30) pour le freinage d'au moins l'une des roues arrière (19) comprenant un organe de commande (31), dont la poignée de manoeuvre (18) fait partie, et un organe d'actionnement (41) associé à ladite roue arrière (19) dont il est proche, un patin de freinage (46) étant appliqué contre ladite roue arrière (19) lorsque l'organe d'actionnement (41) n'est pas commandé par l'organe de commande (31) alors au repos, la poignée de manoeuvre (18) n'étant pas sollicitée, l'organe d'actionnement (41) étant relié à l'organe de commande (31) et adapté à éloigner le patin (46) de la roue arrière (19) sous l'action de l'organe de commande (31) lorsque la poignée de manoeuvre (18) est déplacée en rotation, selon un sens de rotation, en étant sollicitée vers le haut ou vers le bas, l'organe d'actionnement (41) étant mis en oeuvre également lorsque la poignée de manoeuvre (18) est déplacée en rotation selon l'autre sens de rotation en étant sollicitée dans la direction inverse de la précédente, caractérisé par le fait que l'organe d'actionnement (41) est relié à l'organe de commande (31) par une liaison à câble (39), lequel organe de l'organe de commande (31) comprend, outre la poignée de manoeuvre (18), une biellette (32) montée à rotation par sa partie centrale à l'extrémité supérieure d'un montant vertical (12) et reliée, par une de ses extrémités, au câble (39), la poignée de manoeuvre (18) étant adaptée à coopérer avec l'autre extrémité de la biellette (32) pour commande en rotation de celle-ci autour de son axe d'articulation (33).

2. Chariot selon la revendication 1, caractérisé par le fait que l'axe d'articulation (17) de la poignée de manoeuvre (18) est disposé au dessus de l'axe d'articulation (33) de la biellette (32), le câble (39) étant attelé à l'extrémité inférieure de la biellette (32) et la poignée de manoeuvre (18) adaptée à coopérer avec la partie, dite haute, de la biellette (32) qui s'étend au dessus de son axe d'articulation (33).

3. Chariot selon la revendication 2, caractérisé par le fait que au moins l'extrémité des ailes de la poignée de manoeuvre (18) en forme de U, par laquelle elle est montée articulée sur les montants verticaux (12), est en forme de fer-plat (28) dont la tranche inférieure est adaptée à coopérer avec un galet d'appui (34) porté par la biellette (32) à son extrémité supérieure.

4. Chariot selon l'une des revendications 2 ou 3, caractérisé par le fait que l'extrémité, montée à articulation, de l'aile concernée de la poignée de manoeuvre (18) porte une oreille (36) dirigée vers la biellette (32) et munie d'un galet d'appui (37) adapté à coopérer avec la partie haute de la biellette (32).

5. Chariot selon l'une des revendications 2 à 4, caractérisé par le fait que le câble (39) est attelé à l'extrémité inférieure de la biellette (32) par l'intermédiaire d'un galet (35) d'attache monté tournant par rapport à la biellette (32).

6. Chariot selon l'une des revendications 1 à 5, caractérisé par le fait que chaque montant vertical (12) comprend deux longerons tubulaires, un longeron arrière (13) et un longeron avant (14), reliés à leur partie supérieure par une plaque d'assemblage (15).

7. Chariot selon la revendication 6, caractérisé par le fait que la liaison entre l'organe de commande (31) et l'organe d'actionnement (41) comprend une gaine (40) associée au câble (39) traversant le longeron arrière (13) dans lequel elle s'étend en grande partie.

8. Chariot selon l'une des revendications 6 ou 7, caractérisé par le fait que le patin (46) est porté par un étrier (44) monté articulé à rotation (48) sur le longeron arrière (13) et sollicité dans le sens d'application du patin (46) sur le bandage de la roue arrière (19) par un ressort (50) en appui, d'un côté, sur le longeron arrière (13) et, de l'autre côté, sur l'étrier (44).

9. Chariot selon la revendication 8, caractérisé par le fait que l'effort d'application du patin (46) sur la roue arrière (19) provenant du ressort (50) est réglable (49).

10. Chariot selon la revendication 9, caractérisé par le fait que le patin (46) est muni d'au moins une nervure (47) de freinage s'étendant parallèlement à l'axe de la roue arrière (19).

11. Chariot selon l'une des revendications 8 à 10, caractérisé par le fait que l'étrier (44) est adapté à chevaucher latéralement le longeron arrière (13) et comprend deux flasques latéraux (45) par lesquels il est monté à rotation sur le longeron arrière (13), reliés, de manière déportée vers l'extérieur du chariot par rapport à l'axe d'articulation (48) de l'étrier (44), d'une part, par le patin (46) et, d'autre part, par une traverse (51), le patin (46) et la traverse (51) s'étendant dans des plans parallèles à l'axe d'articulation (48) de l'étrier (44) en étant globalement perpendiculaires l'un à l'autre.

12. Chariot selon la revendication 11, caractérisé par le fait que l'étrier (44) est monté articulé (48) par sa partie inférieure et le patin (46) est disposé au dessus de l'axe (48) d'articulation de l'étrier (44) et s'étend globalement horizontalement en étant adapté à coopérer avec la partie supérieure du bandage de la roue arrière (19), le ressort (50) étant un ressort de compression.

13. Chariot selon l'une des revendications 9 à 12, caractérisé par le fait que le ressort (50) prend appui sur le longeron arrière (13) par l'intermédiaire d'un écrou (49) qui coopère avec une tige filetée d'un téton (53) porté par le longeron arrière (13).

14. Chariot selon la revendication 6 prise conjointement avec l'une des revendications 1 à 5, caractérisé par le fait que la poignée de manoeuvre (18) et la biellette (32) sont portées à articulation par la plaque d'assemblage (15).

15. Chariot selon l'une des revendications 8 à 14, caractérisé par le fait que le câble (39) est lié à l'organe d'actionnement (41) par l'intermédiaire d'un galet d'attache (43) porté par les flasques latéraux (45) de l'étrier (44).

16. Chariot selon la revendication 15, caractérisé par le fait que le galet d'attache (43) est monté tournant par rapport aux flasques latéraux (45).

17. Chariot selon l'une des revendications 1 à 16, caractérisé par le fait que l'organe de commande (31) et l'organe d'actionnement (41) sont protégés par un capot (57,55).

18. Chariot selon l'une des revendications 7 à 17, caractérisé par le fait que l'extrémité de la gaine (40) côté organe de commande (31) est fixée au montant vertical (12) par l'intermédiaire d'un galet (56) monté pivotant.

19. Chariot selon l'une des revendications 1 à 18, caractérisé par le fait que les deux roues arrière (19) sont associées chacune à un dispositif de freinage (30).

20. Chariot selon l'une des revendications 1 à 19, caractérisé par le fait qu'il est emboîtable et équipé d'un dispositif de soulèvement (26,27) adapté, lorsque deux tels chariots sont emboîtés l'un dans l'autre, à soulever les roues arrière (19) du chariot précédent.
